# FASCICULE DE BREVET EUROPEEN

(11) **EP 4 012 615 B1**
(45) Date de publication et mention de la délivrance du brevet: **19.07.2023**
(21) Numéro de dépôt: 21212286.5
(22) Date de dépôt: 03.12.2021
(51) Int. Cl.: G06K 19/07

(54) **DISPOSITIF ÉLECTRONIQUE**
ELEKTRONISCHE VORRICHTUNG
ELECTRONIC DEVICE

(30) Priorité: 14.12.2020 FR 2013184
(43) Date de publication de la demande: 15.06.2022
(73) Titulaire: STMicroelectronics (Rousset) SAS, 13790 Rousset (FR)
(72) Inventeur: ROMAIN, Fabrice, 83560 RIANS (FR)
(74) Mandataire: Cabinet Beaumont

(56) Documents cités:
- EP-A1- 2 159 666
- EP-A1- 2 244 528
- US-A1- 2013 260 830
- US-A1- 2014 045 489

## Description

### Domaine technique

La présente description concerne de façon générale les dispositifs électroniques. La présente description concerne plus particulièrement les dispositifs de communication sans fil mettant en œuvre plusieurs modules d'identification d'abonné (« Subscriber Identity Module » - SIM ou « Universal Integrated Circuit Card » - UICC, en anglais).

### Technique antérieure

On connaît des dispositifs de communication sans fil comportant plusieurs circuits intégrés mettant chacun en œuvre un module d'identification d'abonné. Certains de ces circuits peuvent faire partie d'une carte à microcircuit amovible, ou carte SIM, insérée par un utilisateur dans un emplacement dédié du dispositif. D'autres circuits peuvent faire partie d'une puce électronique inamovible, soudée en usine sur une carte de circuit imprimé du dispositif.

La présence de plusieurs de ces circuits, amovibles ou non, dans un même dispositif permet à l'utilisateur d'accéder à des fonctionnalités de communication sans fil étendues. Toutefois, l'intégration de tels circuits entraîne une augmentation de complexité et de coût des dispositifs.

Le document EP 2159666 décrit un dispositif monté en surface avec des cartes SIM multicouches.

Le document US 2014/045489 décrit la gestion d'une horloge de référence.

Le document US 2013/260830 décrit un système de communication sans fil et un dispositif d'accès à un réseau sans fil.

Le document EP 2244528 décrit un dispositif radio mobile doté de plusieurs cartes SIM. Résumé de l'invention

Il existe un besoin d'améliorer les dispositifs électroniques de communication sans fil actuels mettant en oeuvre plusieurs modules d'identification d'abonné.

Un mode de réalisation pallie tout ou partie des inconvénients des dispositifs électroniques de communication sans fil connus mettant en oeuvre plusieurs modules d'identification d'abonné.

Un mode de réalisation prévoit un dispositif électronique comportant : un circuit modulateur-démodulateur ; un premier circuit intégré mettant en oeuvre un premier module d'identification d'abonné ; et au moins un deuxième circuit intégré destiné à mettre en oeuvre un deuxième module d'identification d'abonné, dans lequel une borne de séquencement du premier circuit et une borne de séquencement du deuxième circuit sont connectées à une même borne de séquencement du circuit modulateur-démodulateur,
une première borne (215) d'émission-réception de données du premier circuit (603 ; 703) est connectée à une borne (215) d'émission-réception de données du circuit modulateur-démodulateur (201).

Selon un mode de réalisation, une borne de réinitialisation du premier circuit et une borne de réinitialisation du deuxième circuit sont connectées à une même borne de réinitialisation du circuit modulateur-démodulateur.

Selon un mode de réalisation, une borne d'émission-réception de données du deuxième circuit est connectée à une deuxième borne d'émission-réception de données du premier circuit.

Selon un mode de réalisation, le premier circuit comporte un commutateur reliant la première borne d'émission-réception de données à la deuxième borne d'émission-réception de données.

Selon un mode de réalisation, le dispositif comporte en outre un microcontrôleur transmettant un signal de commande du commutateur.

Selon un mode de réalisation, les bornes de séquencement et de réinitialisation du circuit modulateur-démodulateur et des premier et deuxième circuits font chacune partie d'une interface de communication normalisée ISO 7816.

Selon un mode de réalisation, le premier circuit est une carte de circuit intégré universelle embarquée.

Selon un mode de réalisation, le premier circuit est une carte de circuit intégré universelle intégrée.

Selon un mode de réalisation, le deuxième circuit définit un emplacement destiné à recevoir une carte de circuit intégré universelle.

Un mode de réalisation prévoit un téléphone mobile comportant un dispositif tel que décrit.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon schématique et sous forme de blocs, un exemple de système de communication sans fil du type auquel s'appliquent, à titre d'exemple, les modes de réalisation décrits ;
la figure 2 représente, de façon schématique et sous forme de blocs, un exemple de dispositif électronique de communication sans fil ;
la figure 3 représente, de façon schématique et sous forme de blocs, un autre exemple de dispositif électronique de communication sans fil ;
la figure 4 représente, de façon schématique et sous forme de blocs, encore un autre exemple de dispositif électronique de communication sans fil ;
la figure 5 représente, de façon schématique et sous forme de blocs, encore un autre exemple de dispositif électronique de communication sans fil ;
la figure 6 représente, de façon schématique et sous forme de blocs, un mode de réalisation d'un dispositif électronique de communication sans fil ;
la figure 7 représente, de façon schématique et sous forme de blocs, un autre mode de réalisation d'un dispositif électronique de communication sans fil ; et
la figure 8 représente un exemple de téléphone mobile comportant un dispositif électronique de communication sans fil.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la génération des signaux de communication sans fil et leur interprétation n'ont pas été détaillées, les modes de réalisation décrits étant compatibles avec les techniques usuelles de génération et d'interprétation de ces signaux.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence, sauf précision contraire, à l'orientation des figures.

Sauf précision contraire, les expressions "environ", "approximativement", "sensiblement", et "de l'ordre de" signifient à 10 % près, de préférence à 5 % près.

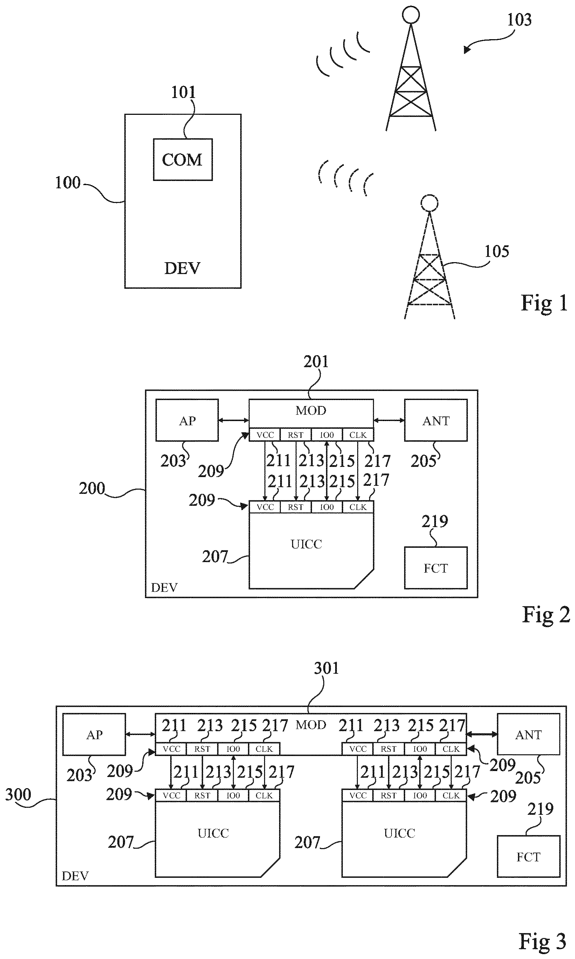

La figure 1 représente, de façon schématique et sous forme de blocs, un exemple de système de communication sans fil du type auquel s'appliquent, à titre d'exemple, les modes de réalisation décrits.

Dans l'exemple représenté, le système comporte un dispositif électronique 100 (DEV) de communication sans fil. Le dispositif 100 est par exemple un dispositif de communication radiofréquence. Le dispositif 100 comporte, dans cet exemple, un circuit de communication sans fil 101 (COM). Le circuit 101 permet par exemple au dispositif 100 de recevoir et de transmettre des données sur un premier réseau de communication, symbolisé en figure 1 par une antenne 103. À titre d'exemple, le dispositif 100 fait partie d'un véhicule automobile, d'un téléphone mobile, d'une tablette tactile, d'un objet connecté, etc.

Comme cela est illustré en figure 1, le circuit de communication 101 peut en outre permettre au dispositif 100 de recevoir et de transmettre des données sur un deuxième réseau de communication, symbolisé en figure 1 par une autre antenne 105. À titre d'exemple, les antennes des premier et deuxième réseaux de communication 103 et 105 font chacune partie d'une infrastructure de télécommunication différente. Ces infrastructures sont par exemple exploitées par des opérateurs différents.

De manière générale, chaque réseau de communication 103, 105 permet par exemple au dispositif 100 de communiquer avec d'autres dispositifs, non représentés en figure 1. Ces autres dispositifs sont par exemple analogues au dispositif 100.

Le dispositif 100 échange par exemple des données avec l'un et l'autre des réseaux 103 et 105 de façon alternative. Cela permet par exemple au dispositif 100 d'émettre et de recevoir des données, messages, appels téléphoniques, etc. en utilisant soit le réseau 103, soit le réseau 105. À titre d'exemple, cela permet au dispositif 100 de communiquer en utilisant l'un des réseaux 103, 105 en cas d'indisponibilité de l'autre réseau 105, 103.

La figure 2 représente, de façon schématique et sous forme de blocs, un exemple de dispositif électronique de communication sans fil 200 (DEV) du type du dispositif 100 de la figure 1. La figure 2 illustre plus précisément le cas d'un dispositif comportant un seul circuit adapté à mettre en oeuvre un module d'identification d'abonné (« Subscriber Identity Module » - SIM ou « Universal Integrated Circuit Card » - UICC, en anglais).

Dans l'exemple représenté, le dispositif 200 comporte un circuit modulateur-démodulateur 201 (MOD), ou modem. Le modem 201 est par exemple relié à un microprocesseur 203 (AP) du dispositif 200. Le microprocesseur 203 est par exemple un processeur d'application principal du dispositif 200. À titre d'exemple, le microprocesseur 203 est soudé sur une carte de circuit imprimé (non représentée), par exemple une carte mère, du dispositif 200. Le modem 201 est par exemple également soudé sur la carte mère du dispositif 200.

Dans l'exemple représenté, le modem 201 est en outre relié à une antenne 205 (ANT) du dispositif 200. L'antenne 205 est par exemple une antenne radiofréquence, capable d'émettre et de recevoir des signaux de communication sur une ou plusieurs bandes de fréquences. Bien que cela n'ait pas été représenté en figure 2, l'antenne 205 est par exemple reliée au modem 201 par un circuit d'adaptation d'impédance. En outre, le dispositif 200 peut comporter au moins un filtre électromagnétique (non représenté), configuré pour atténuer ou éliminer des perturbations électromagnétiques susceptibles d'affecter des signaux reçus ou transmis par l'antenne 205.

Dans l'exemple représenté, le modem 201 est connecté à un circuit intégré 207 (UICC). Le modem 201 et le circuit intégré 207 comportent par exemple chacun une interface de communication 209. Les interfaces de communication 209 du modem 201 et du circuit 207 sont par exemple connectées l'une à l'autre, par exemple par des pistes conductrices de la carte de circuit imprimé du dispositif 200. À titre d'exemple, les interfaces de communication 209 du modem 201 et du circuit intégré 207 sont des interfaces de communication normalisées ISO 7816.

Dans cet exemple, chaque interface de communication 209 comprend :
- une borne 211 (VCC) d'alimentation ;
- une borne 213 (RST) de réinitialisation ;
- une borne 215 (IO0) d'émission-réception de données ; et
- une borne 217 (CLK) de séquencement.

Dans l'exemple représenté, le modem 201 et le circuit 207 s'échangent des signaux et données par l'intermédiaire de leurs interfaces de communication 209 respectives. Pour une communication entre le modem 201 et le circuit intégré 207, l'interface 209 du modem 201 est par exemple configurée comme interface maître tandis que l'interface 209 du circuit 207 est configurée comme interface esclave.

Plus précisément, dans l'exemple représenté :
- la borne 211 de l'interface 209 du modem 201 est configurée pour appliquer un signal d'alimentation VCC sur la borne 211 de l'interface 209 du circuit 207 ;
- la borne 213 de l'interface 209 du modem 201 est configurée pour appliquer un signal de réinitialisation RST sur la borne 213 de l'interface 209 du circuit 207 ;
- la borne 215 de l'interface 209 du modem 201 est configurée pour transmettre des signaux de données IO0 à la borne 215 de l'interface 209 du circuit 207 et pour recevoir des signaux de données IO0 transmis par la borne 215 de l'interface 209 du circuit 207 ; et
- la borne 217 de l'interface 209 du modem 201 est configurée pour appliquer un signal de séquencement ou d'horloge CLK sur la borne 217 de l'interface 209 du circuit 207.

Le circuit intégré 207 du dispositif 200 est par exemple un emplacement ou logement destiné à recevoir une carte à microcircuit amovible. Cette carte à microcircuit est par exemple une carte de circuit intégré universelle (« Universal Integrated Circuit Card » - UICC, en anglais), également appelée carte à module d'identification d'abonné (« Subscriber Identity Module » - SIM, en anglais) ou, plus simplement, carte SIM. Dans ce cas, le circuit intégré 207 comporte par exemple des éléments de reprise de contact (non représentés) permettant de connecter des plots de la carte SIM aux bornes 211, 213, 215 et 217 de l'interface 209 du circuit 207.

La carte SIM est par exemple fournie indépendamment du dispositif 200. À titre d'exemple, la carte SIM est obtenue par un utilisateur du dispositif 200 auprès d'un opérateur de télécommunication, par exemple l'opérateur du réseau 103 de la figure 1. La carte SIM est alors par exemple insérée dans l'emplacement 207 par l'utilisateur, de sorte à permettre au dispositif 200 de communiquer en utilisant le réseau 103.

Afin de permettre au dispositif 200 de communiquer en utilisant un autre réseau, par exemple le réseau 105 de la figure 1, l'utilisateur est par exemple contraint d'acquérir une autre carte SIM. Cette autre carte SIM est par exemple fournie par l'opérateur de télécommunication exploitant le réseau 105. En substituant par exemple la carte SIM de l'opérateur du réseau 103 par celle de l'opérateur du réseau 105 dans l'emplacement 207, l'utilisateur permet alors au dispositif 200 de communiquer en utilisant le réseau 105.

En variante, le circuit intégré 207 est un circuit non amovible mettant en œuvre un module d'identification d'abonné. Le circuit 207 est alors par exemple une carte de circuit intégré universelle embarquée (« embedded Universal Integrated Circuit Card » - eUICC, en anglais), également appelée module embarqué d'identification d'abonné (« embedded Subscriber Identity Module » - eSIM, en anglais) . Dans ce cas, le circuit intégré 207 fait par exemple partie d'une puce électronique solidaire d'une carte de circuit imprimé (non représentée) du dispositif 200. À titre d'exemple, la puce électronique comportant le circuit 207 est soudée sur la carte mère du dispositif 200. Le circuit intégré 207 peut alternativement être une carte de circuit intégré universelle intégrée (« integrated Universal Integrated Circuit Card » - iUICC, en anglais), également appelée module intégré d'identification d'abonné (« integrated Subscriber Identity Module » - iSIM, en anglais). Dans ce cas, le circuit intégré 207 fait par exemple partie du microprocesseur 203 du dispositif 200.

Dans la variante où le circuit intégré 207 est une carte de circuit intégré universelle embarquée ou intégrée, non amovible, le circuit 207 est présent dans le dispositif 200 après fabrication. Pour permettre au dispositif 200 de communiquer en utilisant par exemple le réseau 103 de la figure 1, un profil SIM est par exemple stocké dans une zone mémoire (non représentée) du circuit 207. Ce profil SIM est par exemple téléchargé par l'utilisateur du dispositif 200 depuis un serveur de données exploité par l'opérateur du réseau 103.

Afin de permettre au dispositif 200 de communiquer en utilisant un autre réseau, par exemple le réseau 105 de la figure 1, l'utilisateur est par exemple contraint de télécharger un autre profil SIM. Cet autre profil SIM est par exemple mis à disposition de l'utilisateur par l'opérateur de télécommunication exploitant le réseau 105. En stockant par exemple le profil SIM de l'opérateur du réseau 105 dans la mémoire du circuit 207, l'utilisateur permet alors au dispositif 200 de communiquer en utilisant le réseau 105. En fonction notamment d'une capacité mémoire du circuit 207, le profil SIM de l'opérateur du réseau 105 peut être stocké à la place ou en complément du profil SIM de l'opérateur du réseau 103.

Le dispositif 200 peut en outre comporter un ou plusieurs autres éléments. Ces éléments sont symbolisés, en figure 2, par un bloc fonctionnel 219 (FCT).

La figure 3 représente, de façon schématique et sous forme de blocs, un autre exemple de dispositif électronique de communication sans fil 300 (DEV) du type du dispositif 100 de la figure 1. La figure 3 illustre plus précisément le cas d'un dispositif comportant deux circuits adaptés à mettre en oeuvre chacun un module d'identification d'abonné.

Le dispositif 300 de la figure 3 comprend des éléments communs avec le dispositif 200 de la figure 2. Ces éléments communs ne seront pas détaillés à nouveau ci-après. Le dispositif 300 de la figure 3 diffère du dispositif 200 de la figure 2 principalement en ce que le dispositif 300 comporte, à la place du modem 201, un modem 301 (MOD) comprenant deux interfaces de communication 209.

Dans l'exemple représenté, le modem 301 du dispositif 300 est connecté à deux circuits intégrés 207 (UICC). L'une des interfaces de communication 209 du modem 301 est par exemple connectée à l'interface de communication 209 de l'un des circuits intégrés 207, tandis que l'autre interface de communication 209 du modem 301 est connectée à l'interface de communication 209 de l'autre circuit intégré 207.

Plus précisément, dans l'exemple représenté :
- les bornes 211, 213, 215 et 217 de l'une des interfaces 209 du modem 301 sont connectées respectivement aux bornes 211, 213, 215 et 217 de l'interface 209 de l'un des circuits 207 ; et
- les bornes 211, 213, 215 et 217 de l'autre interface 209 du modem 301 sont connectées respectivement aux bornes 211, 213, 215 et 217 de l'interface 209 de l'autre circuit 207.

Les interfaces de communication 209 du modem 301 sont par exemple connectées aux interfaces de communication 209 des circuits 207 par des pistes conductrices d'une carte de circuit imprimé du dispositif 300. À titre d'exemple, les interfaces de communication 209 du modem 301 sont des interfaces de communication normalisées ISO 7816.

Dans l'exemple représenté, le modem 301 et les circuits 207 s'échangent des signaux et données par l'intermédiaire de leurs interfaces de communication 209 respectives. Pour une communication entre le modem 301 et les circuits intégrés 207, les interfaces 209 du modem 301 sont par exemple configurées comme interfaces maîtres tandis que l'interface 209 de chaque circuit 207 est configurée comme interface esclave.

Plus précisément, dans l'exemple représenté :
- les bornes 211, 213 et 217 de chaque interface 209 du modem 301 sont configurées pour appliquer les signaux VCC, RST et CLK sur les bornes 211, 213 et 217 de l'interface 209 du circuit 207 auxquelles elles sont respectivement connectées ; et
- la borne 215 de chaque interface 209 du modem 301 est configurée pour transmettre les signaux de données IO0 à la borne 215 de l'interface 209 du circuit 207 à laquelle elle est connectée et pour recevoir les signaux de données IO0 transmis par la borne 215 de l'interface 209 du circuit 207 à laquelle elle est connectée.

En fonction par exemple de l'application visée, chaque circuit 207 peut, comme exposé précédemment en relation avec la figure 2, recevoir une carte SIM ou stocker un profil SIM. À titre d'exemple, l'un des circuits 207 du dispositif 300 reçoit une carte SIM, ou stocke un profil SIM, permettant d'accéder à un réseau différent d'un réseau pouvant être utilisé grâce à une carte SIM insérée, ou un profil SIM stocké, dans l'autre circuit 207. L'un des circuits 207 met par exemple en oeuvre un module d'identification d'abonné permettant au dispositif 300 de communiquer en utilisant le réseau 103 de la figure 1. L'autre circuit 207 met par exemple en oeuvre un module d'identification d'abonné permettant au dispositif 300 de communiquer en utilisant le réseau 105 de la figure 1.

Un inconvénient du dispositif 300 tient au fait que le modem 301 comporte deux interfaces de communication 209. Ces deux interfaces 209 entraînent une augmentation de taille, de complexité et de coût du modem 301, donc du dispositif 300.

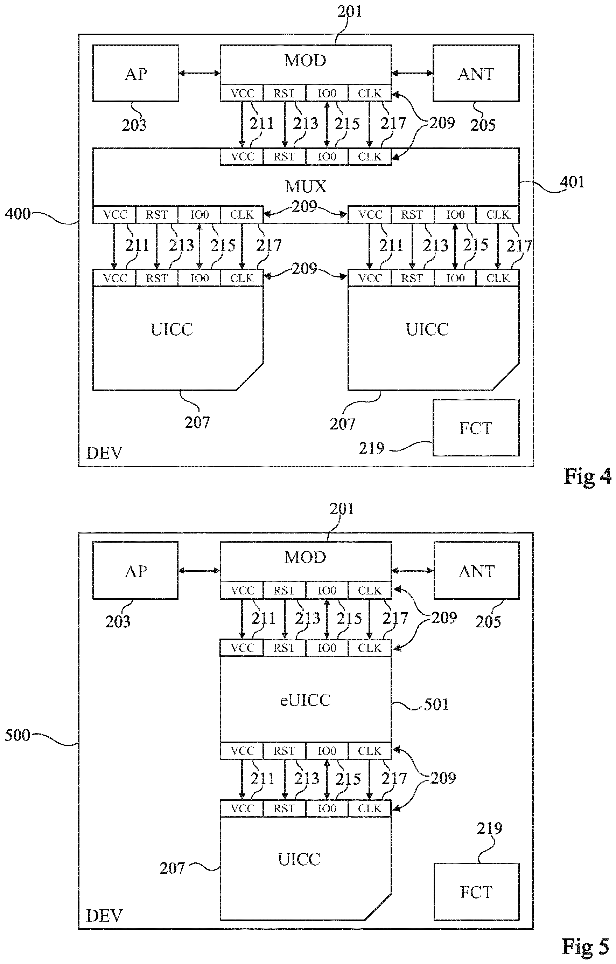

La figure 4 représente, de façon schématique et sous forme de blocs, encore un autre exemple de dispositif électronique de communication sans fil 400 (DEV) du type du dispositif 100 de la figure 1. La figure 4 illustre plus précisément le cas d'un dispositif comportant un modem relié, par un multiplexeur, à deux circuits adaptés à mettre en oeuvre chacun un module d'identification d'abonné.

Le dispositif 400 de la figure 4 comprend des éléments communs avec le dispositif 200 de la figure 2. Ces éléments communs ne seront pas détaillés à nouveau ci-après. Le dispositif 400 de la figure 4 diffère du dispositif 200 de la figure 2 principalement en ce que le dispositif 400 comporte un multiplexeur 401 (MUX) et deux circuits intégrés 207 (UICC).

Dans l'exemple représenté, le modem 201 (MOD) du dispositif 400 est connecté au multiplexeur 401. Le multiplexeur 401 comporte par exemple trois interfaces de communication 209. Comme illustré en figure 4, le multiplexeur 401 comporte par exemple une interface 209 connectée à l'interface 209 du modem 201 et deux autres interfaces 209 connectées chacune à l'interface 209 de l'un des circuits intégrés 207.

Plus précisément, dans l'exemple représenté :
- les bornes 211, 213, 215 et 217 de l'une des interfaces 209 du multiplexeur 401 sont connectées respectivement aux bornes 211, 213, 215 et 217 de l'interface 209 du modem 201 ; et
- les bornes 211, 213, 215 et 217 de chacune des autres interfaces 209 du multiplexeur 401 sont connectées respectivement aux bornes 211, 213, 215 et 217 de l'interface 209 de l'un des circuits 207.

Les interfaces de communication 209 du multiplexeur 401 sont par exemple connectées aux interfaces de communication 209 du modem 201 et des circuits 207 par des pistes conductrices d'une carte de circuit imprimé du dispositif 400. À titre d'exemple, les interfaces de communication du multiplexeur 401 sont des interfaces de communication normalisées ISO 7816.

Dans l'exemple représenté, le modem 201 et les circuits 207 s'échangent des signaux et données par l'intermédiaire du multiplexeur 400. Pour une communication entre le modem 201 et les circuits intégrés 207, l'interface 209 du modem 301 et les interfaces 209 du multiplexeur 401 connectées aux circuits 207 sont par exemple configurées comme interface maîtres tandis que l'interface 209 du multiplexeur connectée au modem 201 et l'interface 209 de chaque circuit 207 sont configurées comme interfaces esclaves.

Plus précisément, dans l'exemple représenté :
- les bornes 211, 213 et 217 de l'interface 209 du modem 201 sont configurées pour appliquer les signaux VCC, RST et CLK sur les bornes 211, 213 et 217 de l'interface 209 du multiplexeur 401 connectée au modem 201 ;
- la borne 215 de l'interface 209 du modem 201 est configurée pour transmettre les signaux de données IO0 à la borne 215 de l'interface 209 du multiplexeur 401 connectée au modem 201 et pour recevoir les signaux de données IO0 transmis par la borne 215 de l'interface 209 du multiplexeur 401 connectée au modem 201 ;
- les bornes 211, 213 et 217 de chaque interface 209 du multiplexeur 401 connectée à l'un des circuits 207 sont configurées pour appliquer les signaux VCC, RST et CLK sur les bornes 211, 213 et 217 de l'interface 209 du circuit 207 associé ; et
- la borne 215 de chaque interface 209 du multiplexeur 401 connectée à l'un des circuits 207 est configurée pour transmettre les signaux de données IO0 à la borne 215 de l'interface 209 du circuit 207 associé et pour recevoir les signaux de données IO0 transmis par la borne 215 de l'interface 209 du circuit 207 associé.

À titre d'exemple, le multiplexeur 401 est adapté à aiguiller les signaux VCC, RST, IO0 et CLK vers l'un ou l'autre des circuits 207 du dispositif 400, par exemple en fonction d'un signal de commande (non représenté). Ce signal de commande est par exemple transmis au multiplexeur 401 par le microprocesseur 203 (AP). Le multiplexeur 401 est par exemple configuré pour permettre au modem 201 d'échanger les signaux de données IO0 avec l'un ou l'autre des circuits 207, par exemple de façon alternative. Dans ce cas, le multiplexeur 401 transmet par exemple les signaux IO0 reçus du modem 201 à l'un ou l'autre des circuits 207 en fonction du signal de commande.

En variante, le multiplexeur 401 est par exemple configuré pour permettre au modem 201 d'échanger les signaux de données IO0 avec les deux circuits 207, par exemple de façon simultanée. Dans ce cas, le multiplexeur 401 est par exemple configuré pour démultiplexer les signaux IO0 reçus du modem 201, puis pour transmettre ces signaux démultiplexés à chaque circuit 207. Le multiplexeur 401 est par exemple configuré en outre pour multiplexer les signaux IO0 reçus des circuits 207, puis pour transmettre ces signaux multiplexés au modem 201.

Un inconvénient du dispositif 400 tient au fait que les circuits 207 sont reliés au modem 201 par l'intermédiaire du multiplexeur 401. La présence du multiplexeur 401 entraîne une augmentation de complexité, de taille et de coût du dispositif 400.

La figure 5 représente, de façon schématique et sous forme de blocs, encore un autre exemple de dispositif électronique de communication sans fil 500 (DEV) du type du dispositif 100 de la figure 1. La figure 5 illustre plus précisément le cas d'un dispositif comportant deux circuits adaptés à mettre en oeuvre chacun un module d'identification d'abonné, l'un des circuits étant relié à un modem par l'autre circuit.

Le dispositif 500 de la figure 5 comprend des éléments communs avec le dispositif 200 de la figure 2. Ces éléments communs ne seront pas détaillés à nouveau ci-après. Le dispositif 500 de la figure 5 diffère du dispositif 200 de la figure 2 principalement en ce que le circuit intégré 207 (UICC) du dispositif 500 est relié au modem 201 (MOD) par l'intermédiaire d'un autre circuit intégré 501 (eUICC).

Dans l'exemple représenté, le modem 201 et le circuit 207 du dispositif 500 sont connectés chacun au circuit 501. Le circuit 501 comporte par exemple deux interfaces de communication 209 analogues à celles du modem 201 et du circuit 207. L'une des interfaces de communication 209 du circuit 501 est par exemple connectée à l'interface de communication 209 du modem 201. L'autre interface de communication 209 du circuit 501 est par exemple connectée à l'interface de communication 209 du circuit intégré 207.

Plus précisément, dans l'exemple représenté :
- les bornes 211, 213, 215 et 217 de l'une des interfaces 209 du circuit 501 sont connectées respectivement aux bornes 211, 213, 215 et 217 de l'interface 209 du modem 201 ; et
- les bornes 211, 213, 215 et 217 de l'autre interface 209 du circuit 501 sont connectées respectivement aux bornes 211, 213, 215 et 217 de l'interface 209 du circuit 207.

Les interfaces de communication 209 du circuit 501 sont par exemple connectées aux interfaces de communication 209 du modem 201 et du circuit 207 par des pistes conductrices d'une carte de circuit imprimé du dispositif 500. À titre d'exemple, les interfaces de communication 209 du circuit intégré 501 sont des interfaces de communication normalisées ISO 7816.

Dans l'exemple représenté, le modem 201 et les circuits 501, 207 s'échangent des signaux et données par l'intermédiaire de leurs interfaces de communication 209 respectives. Pour une communication entre le modem 201 et les circuits intégrés 501, 207, l'interface 209 du modem 201 et l'interface 209 du circuit 501 connectée au circuit 207 sont par exemple configurées comme interfaces maîtres. L'interface 209 du circuit 501 connectée au modem 201 et l'interface 209 du circuit 207 sont par exemple configurées comme interfaces esclaves.

Plus précisément, dans l'exemple représenté :
- les bornes 211, 213 et 217 de l'interface 209 du modem 201 sont configurées pour appliquer les signaux VCC, RST et CLK sur les bornes 211, 213 et 217 de l'interface 209 du circuit 501 auxquelles elles sont respectivement connectées ; et
- la borne 215 de l'interface 209 du modem 201 est configurée pour transmettre les signaux de données IO0 à la borne 215 de l'interface 209 du circuit 501 à laquelle elle est connectée et pour recevoir les signaux de données IO0 transmis par la borne 215 de l'interface 209 du circuit 501 à laquelle elle est connectée.

En outre, dans l'exemple représenté :
- les bornes 211, 213 et 217 de l'interface 209 du circuit 501 connectée au circuit 207 sont configurées pour appliquer les signaux VCC, RST et CLK sur les bornes 211, 213 et 217 de l'interface 209 du circuit 207 auxquelles elles sont respectivement connectées ; et
- la borne 215 de l'interface 209 du circuit 501 connectée au circuit 207 est configurée pour transmettre les signaux de données IO0 à la borne 215 de l'interface 209 du circuit 207 et pour recevoir les signaux de données IO0 transmis par la borne 215 de l'interface 209 du circuit 207.

En fonction par exemple de l'application visée, chaque circuit 501, 207 peut, comme exposé précédemment en relation avec la figure 2, recevoir une carte SIM ou stocker un profil SIM. Le circuit 501 est par exemple une carte de circuit intégré universelle embarquée, eUICC. Le circuit 207 définit par exemple un emplacement destiné à recevoir une carte SIM. À titre d'exemple, le circuit 501 stocke un profil SIM permettant d'accéder à un réseau différent du réseau pouvant être utilisé grâce à la carte SIM insérée dans le circuit 207. Le circuit 501 met par exemple en oeuvre un module d'identification d'abonné permettant au dispositif 500 de communiquer en utilisant le réseau 103 de la figure 1. Le circuit 207 est par exemple destiné à mettre en oeuvre un module d'identification d'abonné permettant au dispositif 500 de communiquer en utilisant le réseau 105 de la figure 1.

À titre d'exemple, le circuit 501 est adapté à traiter les signaux VCC, RST, IO0 et CLK reçus du modem 201 ou à transmettre ces signaux vers le circuit 207, par exemple en fonction d'un signal de commande non représenté. Ce signal de commande est par exemple transmis au circuit 501 par le microprocesseur 203 (AP). Le circuit 501 est par exemple configuré pour permettre au modem 201 d'échanger les signaux de données IO0 avec l'un ou l'autre des circuits 501, 207, par exemple de façon alternative. Le circuit 501 agit par exemple comme une passerelle (« bridge », en anglais) de communication entre le modem 201 et le circuit 207 du dispositif 500.

Un inconvénient du dispositif 500 tient au fait que le circuit 501 comporte une interface 209 configurée en tant que maître pour la communication avec le circuit 207. La présence de cette interface entraîne une augmentation de complexité, de taille et de coût du circuit 501, donc du dispositif 500. En outre, une telle interface requiert une programmation logicielle difficile à réaliser.

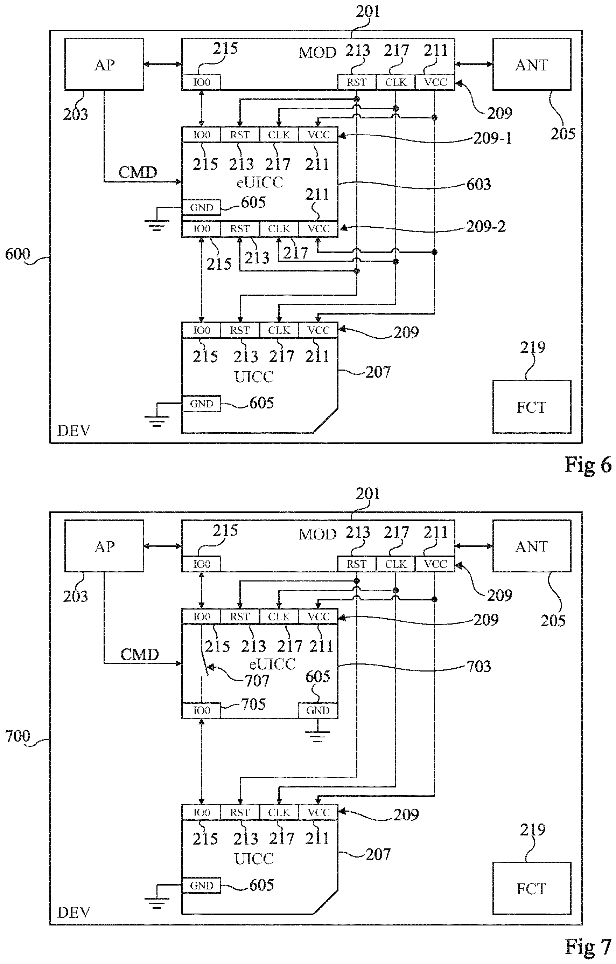

La figure 6 représente, de façon schématique et sous forme de blocs, un mode de réalisation d'un dispositif électronique de communication sans fil 600 (DEV) du type du dispositif 100 de la figure 1. La figure 6 illustre plus précisément le cas d'un dispositif comportant deux circuits adaptés à mettre en oeuvre chacun un module d'identification d'abonné, ces circuits étant reliés à une même interface de communication d'un modem.

Le dispositif 600 de la figure 6 comprend des éléments communs avec le dispositif 200 de la figure 2. Ces éléments communs ne seront pas détaillés à nouveau ci-après. Le dispositif 600 de la figure 6 diffère du dispositif 200 de la figure 2 principalement en ce que le dispositif 600 comporte, outre le circuit intégré 207 (UICC), un autre circuit intégré 603 (eUICC) connecté au modem 201 (MOD).

Dans l'exemple représenté, les circuits intégrés 603 et 207 du dispositif 600 sont connectés chacun au modem 201. Le circuit 603 comporte par exemple deux interfaces de communication 209-1 et 209-2, par exemple analogues aux interfaces 209 du modem 201 et du circuit 207. L'une des interfaces de communication 209 (209-1, 209-2) du circuit 603, par exemple l'interface 209-1, est connectée à l'interface de communication 209 du modem 201. L'autre interface de communication 209-2 du circuit 603 est par exemple connectée, à l'exception de sa borne 215, à l'interface de communication 209 du modem 201. L'interface de communication 209 du circuit 207 est par exemple connectée, à l'exception de sa borne 215, à l'interface de communication 209 du modem 201.

Plus précisément, dans l'exemple représenté :
- les bornes 211, 213, 215 et 217 de l'interface 209 du modem 201 sont connectées respectivement aux bornes 211, 213, 215 et 217 de l'interface 209-1 du circuit 603 ;
- les bornes 211, 213 et 217 de l'interface 209 du modem 201 sont connectées respectivement aux bornes 211, 213 et 217 de l'interface 209-2 du circuit 603 ; et
- les bornes 211, 213 et 217 de l'interface 209 du modem 201 sont connectées respectivement aux bornes 211, 213 et 217 de l'interface 209 du circuit 207.

L'interface de communication 209 du modem 201 est par exemple connectée aux interfaces de communication 209-1 et 209-2 du circuit 603 et à l'interface de communication 209 du circuit 207 par des pistes conductrices d'une carte de circuit imprimé du dispositif 600. À titre d'exemple, les interfaces de communication 209-1 et 209-2 du circuit intégré 603 sont des interfaces de communication normalisées ISO 7816.

Dans l'exemple représenté, le modem 201 et les circuits 603, 207 s'échangent des signaux et données par l'intermédiaire de leurs interfaces de communication 209, 209-1, 209-2 respectives. Pour une communication entre le modem 201 et les circuits intégrés 603, 207, l'interface 209 du modem 201 est par exemple configurée comme interface maître. Les interfaces 209-1 et 209-2 du circuit 603 et l'interface 209 du circuit 207 sont par exemple configurées comme interfaces esclaves.

Plus précisément, dans l'exemple représenté :
- les bornes 211, 213 et 217 de l'interface 209 du modem 601 sont configurées pour appliquer les signaux VCC, RST et CLK sur les bornes 211, 213 et 217 des interfaces 209-1 et 209-2 du circuit 603 et sur les bornes 211, 213 et 217 de l'interface 209 du circuit 207 auxquelles elles sont respectivement connectées ;
- la borne 215 de l'interface 209 du modem 201 est configurée pour transmettre les signaux de données IO0 à la borne 215 de l'interface 209-1 du circuit 603 à laquelle elle est connectée et pour recevoir les signaux de données IO0 transmis par la borne 215 de l'interface 209-1 du circuit 603 à laquelle elle est connectée ; et
- la borne 215 de l'interface 209-2 du circuit 603 est configurée pour transmettre les signaux de données IO0 à la borne 215 de l'interface 209 du circuit 207 à laquelle elle est connectée et pour recevoir les signaux de données IO0 transmis par la borne 215 de l'interface 209 du circuit 207 à laquelle elle est connectée.

Dans l'exemple représenté, chaque circuit intégré 603, 207 comporte en outre une borne 605 (GND) portée à un potentiel de référence, par exemple la masse.

Le circuit intégré 603 comporte par exemple des tampons mémoire (« buffer », en anglais) de réception et de transmission (non représentés). Plus précisément, le circuit 603 comporte par exemple :
- un tampon mémoire de réception et un tampon mémoire de transmission associés à l'interface 209-1 ; et
- un autre tampon mémoire de réception et un autre tampon mémoire de transmission associés à l'interface 209-2.

À titre d'exemple, lors d'une communication utilisant le circuit 207, des données ou commandes reçues par la borne 215 de l'interface 209-1 sont stockées dans le tampon mémoire de réception de l'interface 209-1. Ces données ou commandes sont ensuite transférées ou copiées, par exemple par un logiciel du circuit 603, dans le tampon mémoire de transmission de l'interface 209-2 puis transmises, par la borne 215 de l'interface 209-2, au circuit 207. De façon analogue, des données ou commandes reçues par la borne 215 de l'interface 209-2 sont stockées dans le tampon mémoire de réception de l'interface 209-2. Ces données ou commandes sont ensuite transférées ou copiées, par exemple par le logiciel du circuit 603, dans le tampon mémoire de transmission de l'interface 209-1 puis transmises, par la borne 215 de l'interface 209-1, au modem 201. À titre de variante, les données ou commandes peuvent être transférées entre les tampons mémoire du circuit 603 par un composant matériel d'accès direct à la mémoire (« Direct Memory Access » - DMA, en anglais) du circuit 603.

Le transfert des données ou commandes entre les tampons mémoire du circuit 603 est par exemple conditionné par un signal de commande CMD transmis par le microprocesseur 203 (AP). À titre d'exemple, le signal de commande CMD est un signal binaire dont un premier état autorise le transfert des données ou commandes entre les tampons mémoire du circuit 603 et dont un deuxième état inhibe le transfert des données ou commandes entre les tampons mémoire du circuit 603. Le premier état correspond par exemple à un cas dans lequel le dispositif 600 communique en utilisant le circuit 207, le circuit 603 n'étant alors par exemple pas utilisé pour communiquer. Le deuxième état correspond par exemple à un autre cas dans lequel le dispositif 600 communique en utilisant le circuit 603, le circuit 207 n'étant alors par exemple pas utilisé pour communiquer.

En variante, le signal de commande CMD est transmis par le modem 201. À titre d'exemple, le signal CMD est transmis par une borne d'entrée-sortie universelle (non représentée) du modem 201.

En fonction par exemple de l'application visée, chaque circuit 603, 207 du dispositif 600 peut, comme exposé précédemment en relation avec la figure 2, recevoir une carte SIM ou stocker un profil SIM. Le circuit 603 est par exemple une carte de circuit intégré universelle embarquée, eUICC. Le circuit 207 définit par exemple un emplacement destiné à recevoir une carte SIM. À titre d'exemple, le circuit 603 stocke un profil SIM permettant d'accéder à un réseau différent du réseau pouvant être utilisé grâce à la carte SIM insérée dans le circuit 207. Le circuit 603 met par exemple en oeuvre un module d'identification d'abonné permettant au dispositif 600 de communiquer en utilisant le réseau 103 de la figure 1. Le circuit 207 est par exemple destiné à mettre en oeuvre un module d'identification d'abonné permettant au dispositif 600 de communiquer en utilisant le réseau 105 de la figure 1.

Le dispositif 600 de la figure 6 diffère du dispositif 500 de la figure 5 notamment en ce que le circuit 603 du dispositif 600 ne comporte pas d'interface de communication 209 configurée en tant que maître, contrairement au circuit 501.

Un avantage du mode de réalisation exposé ci-dessus en relation avec la figure 6 tient au fait que le dispositif 600 est moins complexe, moins coûteux et moins encombrant, par rapport notamment aux dispositifs 400 et 500.

La figure 7 représente, de façon schématique et sous forme de blocs, un autre mode de réalisation d'un dispositif électronique de communication sans fil 700 (DEV) du type du dispositif 100 de la figure 1. La figure 7 illustre plus précisément le cas d'un dispositif comportant deux circuits adaptés à mettre en oeuvre chacun un module d'identification d'abonné, ces circuits étant reliés à une même interface de communication d'un modem.

Le dispositif 700 de la figure 7 comprend des éléments communs avec le dispositif 600 de la figure 6. Ces éléments communs ne seront pas détaillés à nouveau ci-après. Le dispositif 700 de la figure 7 diffère du dispositif 600 de la figure 6 principalement en ce que le dispositif 700 comporte, à la place du circuit 603, un circuit 703 (eUICC).

Dans l'exemple représenté, le circuit 703 comporte une seule interface de communication 209, par exemple analogue à l'interface de communication 209-1 du circuit 603. Le circuit 703 correspond par exemple à un circuit similaire au circuit 603 qui serait dépourvu de l'interface de communication 209-2, ou dont l'interface de communication 209-2 ne serait pas connectée au modem 201.

Plus précisément, dans l'exemple représenté :
- les bornes 211, 213, 215 et 217 de l'interface 209 du modem 201 sont connectées respectivement aux bornes 211, 213, 215 et 217 de l'interface 209 du circuit 703 ; et
- les bornes 211, 213 et 217 de l'interface 209 du modem 201 sont connectées respectivement aux bornes 211, 213 et 217 de l'interface 209 du circuit 207.

L'interface de communication 209 du modem 201 est par exemple connectée aux interfaces de communication 209 des circuits 603 et 207 par des pistes conductrices d'une carte de circuit imprimé du dispositif 700. À titre d'exemple, l'interface de communication 209 du circuit intégré 703 est une interface de communication normalisée ISO 7816.

Dans l'exemple représenté, le modem 201 et les circuits 703, 207 s'échangent des signaux et données par l'intermédiaire de leurs interfaces de communication 209 respectives. Pour une communication entre le modem 201 et les circuits intégrés 703, 207, l'interface 209 du modem 201 est par exemple configurée comme interface maître. Les interfaces 209 des circuits 703, 207 sont par exemple configurées comme interfaces esclaves.

Plus précisément, dans l'exemple représenté :
- les bornes 211, 213 et 217 de l'interface 209 du modem 601 sont configurées pour appliquer les signaux VCC, RST et CLK sur les bornes 211, 213 et 217 de l'interface 209 du circuit 703, 207 auxquelles elles sont respectivement connectées ;
- la borne 215 de l'interface 209 du modem 201 est configurée pour transmettre les signaux de données IO0 à la borne 215 de l'interface 209 du circuit 703 à laquelle elle est connectée et pour recevoir les signaux de données IO0 transmis par la borne 215 de l'interface 209 du circuit 703 à laquelle elle est connectée.

En outre, dans l'exemple représenté, une borne 705 du circuit 703 est configurée pour transmettre les signaux de données IO0 à la borne 215 de l'interface 209 du circuit 207 à laquelle elle est connectée et pour recevoir les signaux de données IO0 transmis par la borne 215 de l'interface 209 du circuit 207 à laquelle elle est connectée. À titre d'exemple, la borne 705 est une borne d'entrée-sortie, par exemple universelle, du circuit 703. En variante, la borne 705 correspond à une borne d'émission-réception de données faisant partie d'une autre interface de communication (non représentée) analogue à l'interface 209 du circuit 703 dont les autres bornes ne sont pas connectées.

Dans l'exemple représenté, le circuit 703 comporte en outre un commutateur 707. Le commutateur 707 est par exemple configuré pour connecter la borne 215 de l'interface 209 du circuit 703 à la borne 705 en fonction de l'état du signal de commande CMD reçu du microprocesseur 203 (AP). Le premier état du signal CMD correspond par exemple à un cas dans lequel le commutateur 707 est fermé. Le dispositif 700 communique alors en utilisant le circuit 207, le circuit 703 n'étant par exemple pas utilisé pour communiquer. Le deuxième état du signal CMD correspond par exemple à un autre cas dans lequel le commutateur 707 est ouvert. Le dispositif 700 communique alors en utilisant le circuit 703, le circuit 207 n'étant par exemple pas utilisé pour communiquer.

Par rapport au dispositif 600, le dispositif 700 présente l'avantage de ne pas comporter de connexions entre le modem 201 et l'interface de communication 209-2 du circuit 603. Cela réduit encore davantage la taille, la complexité et le coût du dispositif 700.

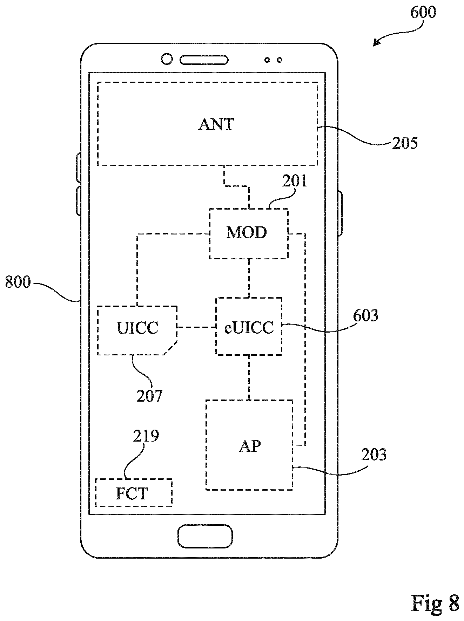

La figure 8 représente un exemple de téléphone mobile 800 comportant le dispositif électronique 600 de communication sans fil.

Dans l'exemple représenté, le dispositif électronique 600 embarqué dans le téléphone mobile 800 permet avantageusement au téléphone mobile 800 de communiquer en utilisant plusieurs circuits intégrés mettant en oeuvre chacun un module d'identification d'abonné, tout en limitant la complexité du dispositif 600 permettant d'accéder à ces fonctionnalités de communication étendues.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, bien que les modes de réalisation décrits prennent pour exemple le cas d'un téléphone mobile, la personne du métier est capable de transposer ces modes de réalisation à tout type de dispositif électronique.

En outre, la personne du métier est capable de combiner les modes de réalisation décrits en relation avec les figures 6 et 7. La personne du métier est notamment capable de prévoir, dans le circuit 603 du dispositif 600 de la figure 6, un commutateur analogue au commutateur 707 du dispositif 700 de la figure 7. La personne du métier est également capable d'adapter le circuit 703 du dispositif 700 en substituant le commutateur 707 par des tampons mémoire analogues à ceux décrits en relation avec la figure 6 pour transférer des données ou commandes entre la borne 215 de l'interface 209 du circuit 703 et la borne 705.

La personne du métier est également capable de transposer les modes de réalisation décrits en relation avec les figures 6 et 7 à un nombre quelconque de circuits 207, par exemple en prévoyant autant de bornes 705 que de circuits 207. Dans ce cas, le commutateur 707 peut par exemple être adapté pour connecter la borne 215 de l'interface 209 du circuit 703 à l'une des bornes 705 ou pour forcer un circuit ouvert entre la borne 215 de l'interface 209 du circuit 703 et toutes les bornes 705.

Enfin, la mise en oeuvre pratique des modes de réalisation et variantes décrits est à la portée de la personne du métier à partir des indications fonctionnelles données ci-dessus. En particulier, la personne du métier est capable de choisir, pour chaque circuit intégré 603, 703, 207, le type de circuit à utiliser parmi un emplacement destiné à recevoir une UICC physique (carte SIM), une eUICC et une iUICC, les modes de réalisation décrits étant adaptables à une combinaison quelconque de ces types de circuits.

## Revendications

1. Dispositif électronique (600 ; 700) comportant :
- un circuit modulateur-démodulateur (201) ;
- un premier circuit intégré (603 ; 703) mettant en oeuvre un premier module d'identification d'abonné ; et
- au moins un deuxième circuit intégré (207) destiné à mettre en oeuvre un deuxième module d'identification d'abonné,
dans lequel une borne (217) de séquencement du premier circuit et une borne (217) de séquencement du deuxième circuit sont connectées à une même borne (217) de séquencement du circuit modulateur-démodulateur, **caractérisé en ce qu'**une première borne (215) d'émission-réception de données du premier circuit (603 ; 703) est connectée à une borne (215) d'émission-réception de données du circuit modulateur-démodulateur (201).

2. Dispositif selon la revendication 1, dans lequel une borne (213) de réinitialisation du premier circuit (603 ; 703) et une borne (213) de réinitialisation du deuxième circuit (207) sont connectées à une même borne (213) de réinitialisation du circuit modulateur-démodulateur (201).

3. Dispositif selon la revendication 1 ou 2, dans lequel une borne (215) d'émission-réception de données du deuxième circuit (207) est connectée à une deuxième borne (215 ; 705) d'émission-réception de données du premier circuit (603 ; 703).

4. Dispositif selon la revendication 3, dans lequel le premier circuit (703) comporte un commutateur (707) reliant la première borne (705) d'émission-réception de données à la deuxième borne (215) d'émission-réception de données.

5. Dispositif selon la revendication 4, comportant en outre un microcontrôleur (203) transmettant un signal de commande (CMD) du commutateur (707).

6. Dispositif selon l'une quelconque des revendications 1 à 5, dans lequel les bornes de séquencement et de réinitialisation (217, 213) du circuit modulateur-démodulateur (201) et des premier et deuxième circuits (603, 207 ; 703, 207) font chacune partie d'une interface de communication normalisée ISO 7816.

7. Dispositif selon l'une quelconque des revendications 1 à 6, dans lequel le premier circuit (603 ; 703) est une carte de circuit intégré universelle embarquée.

8. Dispositif selon l'une quelconque des revendications 1 à 6, dans lequel le premier circuit (603 ; 703) est une carte de circuit intégré universelle intégrée.

9. Dispositif selon l'une quelconque des revendications 1 à 8, dans lequel le deuxième circuit (207) définit un emplacement destiné à recevoir une carte de circuit intégré universelle.

10. Téléphone mobile (800) comportant un dispositif (600 ; 700) selon l'une quelconque des revendications 1 à 9.

## Patentansprüche

1. Elektronische Vorrichtung (600; 700), die Folgendes aufweist:
- eine Modulator-Demodulator-Schaltung (201);
- eine erste integrierte Schaltung (603; 703), die ein erstes Teilnehmeridentifikationsmodul implementiert; und
mindestens eine zweite integrierte Schaltung (207), die dazu bestimmt ist, ein zweites Teilnehmeridentifikationsmodul zu implementieren,
wobei ein Sequenzierungsanschluss (217) der ersten Schaltung und ein Sequenzierungsanschluss (217) der zweiten Schaltung mit demselben Sequenzierungsanschluss (217) der Modulator-Demodulator-Schaltung verbunden sind,
**dadurch gekennzeichnet, dass** ein erster Daten-Sende-Empfangsanschluss (215) der ersten Schaltung (603; 703) mit einem Daten-Sende-Empfangsanschluss (215) der Modulator-Demodulator-Schaltung (201) verbunden ist.

2. Vorrichtung nach Anspruch 1, wobei ein Rücksetzanschluss (213) der ersten Schaltung (603; 703) und ein Rücksetzanschluss (213) der zweiten Schaltung (207) mit demselben Rücksetzanschluss (213) der Modulator-Demodulator-Schaltung (201) verbunden sind.

3. Vorrichtung nach Anspruch 1 oder 2, wobei ein Daten-Sende-Empfangsanschluss (215) der zweiten Schaltung (207) mit einem zweiten Daten-Sende-Empfangsanschluss (215; 705) der ersten Schaltung (603; 703) verbunden ist.

4. Vorrichtung nach Anspruch 3, wobei die erste Schaltung (703) einen Schalter (707) aufweist, der den ersten Daten-Sende-Empfangsanschluss (705) mit dem zweiten Daten-Sende-Empfangsanschluss (215) koppelt.

5. Vorrichtung nach Anspruch 4, ferner aufweisend einen Mikrocontroller (203), der ein Signal (CMD) zur Steuerung des Schalters (707) sendet.

6. Vorrichtung nach einem der Ansprüche 1 bis 5, wobei die Sequenzierungs- und Rücksetzanschlüsse (217, 213) der Modulator-Demodulator-Schaltung (201) und der ersten und zweiten Schaltungen (603, 207; 703, 207) jeweils Teil einer standardisierten Kommunikationsschnittstelle nach ISO 7816 sind.

7. Vorrichtung nach einem der Ansprüche 1 bis 6, wobei die erste Schaltung (603; 703) eine eingebettete universelle integrierte Schaltungskarte ist.

8. Vorrichtung nach einem der Ansprüche 1 bis 6, bei der die erste Schaltung (603; 703) eine integrierte universelle integrierte Schaltungskarte ist.

9. Vorrichtung nach einem der Ansprüche 1 bis 8, wobei die zweite Schaltung (207) einen Schlitz definiert, der zur Aufnahme einer universellen integrierten Schaltungskarte bestimmt ist.

10. Mobiltelefon (800) mit einer Vorrichtung (600; 700) nach einem der Ansprüche 1 bis 9.

## Claims

1. Electronic device (600; 700) comprising:
- a modulator-demodulator circuit (201);
- a first integrated circuit (603; 703) implementing a first subscriber identification module; and
at least one second integrated circuit (207) intended to implement a second subscriber identification module, wherein a sequencing terminal (217) of the first circuit and a sequencing terminal (217) of the second circuit are connected to a same sequencing terminal (217) of the modulator-demodulator circuit, **characterized in that** a first data transmit-receive terminal (215) of the first circuit (603; 703) is connected to a data transmit-receive terminal (215) of the modulator-demodulator circuit (201).

2. Device according to claim 1, wherein a reset terminal (213) of the first circuit (603; 703) and a reset terminal (213) of the second circuit (207) are connected to a same reset terminal (213) of the modulator-demodulator circuit (201).

3. Device according to claim 1 or 2, wherein a data transmit-receive terminal (215) of the second circuit (207) is connected to a second data transmit-receive terminal (215; 705) of the first circuit (603; 703).

4. Device according to claim 3, wherein the first circuit (703) comprises a switch (707) coupling the first data transmit-receive terminal (705) to the second data transmit-receive terminal (215).

5. Device according to claim 4, further comprising a microcontroller (203) transmitting a signal (CMD) for controlling the switch (707).

6. Device according to any of claims 1 to 5, wherein the sequencing and reset terminals (217, 213) of the modulator-demodulator circuit (201) and of the first and second circuits (603, 207; 703, 207) each form part of a standardized ISO 7816 communication interface.

7. Device according to any of claims 1 to 6, wherein the first circuit (603; 703) is an embedded universal integrated circuit card.

8. Device according to any of claims 1 to 6, wherein the first circuit (603; 703) is an integrated universal integrated circuit card.

9. Device according to any of claims 1 to 8, wherein the second circuit (207) defines a slot intended to receive a universal integrated circuit card.

10. Mobile phone (800) comprising a device (600; 700) according to any of claims 1 to 9.
